# EUROPÄISCHE PATENTSCHRIFT

(11) **EP 0 748 975 B1**
(45) Veröffentlichungstag und Bekanntmachung des Hinweises auf die Patenterteilung: **06.10.1999**
(21) Anmeldenummer: 96107136.2
(22) Anmeldetag: 07.05.1996
(51) Int. Cl.: F16L 37/088

(54) **Steckkupplung für Druckmittelsysteme**
Plug connector for pressure fluid systems
Connecteur à emboîtement pour systèmes à fluide sous pression

(30) Priorität: 17.06.1995 DE 19522052
(43) Veröffentlichungstag der Anmeldung: 18.12.1996
(73) Patentinhaber: Armaturenfabrik Hermann Voss GmbH + Co., 51688 Wipperfürth (DE)
(72) Erfinder: Hefele, Reinhard Dr.-Ing., 51465 Berg.-Gladbach (DE); Kaminski, Volker, 58553 Halver (DE)
(74) Vertreter: Patentanwälte Dr. Solf & Zapf

(56) Entgegenhaltungen:
- EP-A- 0 226 689
- GB-A- 799 155
- US-A- 3 929 357
- US-A- 4 483 510
- US-A- 4 703 958

## Beschreibung

Die vorliegende Erfindung betrifft eine Steckkupplung für Druckmittelsysteme, bestehend aus einem Gehäuseteil und einem Steckerteil, wobei das Steckerteil mit einem Steckerschaft über mindestens eine Umfangsdichtung abgedichtet in eine Aufnahmeöffnung des Gehäuseteils einsteckbar und über eine Verriegelungseinrichtung gegen Lösen arretierbar ist, wobei die Verriegelungseinrichtung derart ausgebildet ist, daß eine teilgesteckte Vorraststellung und eine ganz gesteckte Vollraststellung gewährleistet sind, wobei in der Vorraststellung eine derart unvollständige Abdichtung vorliegt, daß im Falle einer Druckbeaufschlagung mit einem Druckmedium ein Signal, insbesondere ein akustisch wahrnehmbares Leckgeräusch, erzeugt wird, und wobei in der Vollraststellung eine vollständige, druckdichte Abdichtung vorliegt.

Derartige Steckkupplungen werden beispielsweise in Kraftfahrzeug-Bremssystemen, insbesondere bei LKW-Luftdruckbremsanlagen, eingesetzt. Speziell (aber natürlich nicht nur) bei diesem Anwendungsfall besteht das Problem, daß in manchen Fällen, z.B. bei ungünstigen Platzverhältnissen bzw. Einbausituationen, vom Monteur beim Stecken nicht sorgfältig genug auf ein korrektes, vollständiges Stecken geachtet wird, so daß in der Praxis Prüfvorgänge eingeschaltet werden müssen, um zu verhindern, daß beim Aufbau des Bremsdruckes die Kupplung plötzlich ungewollt getrennt wird.

Aus der EP-B1-0 226 689 ist eine solche "Kupplungsvorrichtung" bekannt, bei der zur Vermeidung der beschriebenen Probleme schon im noch nicht ganz korrekt gesteckten Zustand der Kupplungsteile eine "Vorrastung" gewährleistet ist, die es verhindert, daß bei Druckbeaufschlagung die Kupplung ganz getrennt wird. Dabei ist in dieser Vorraststellung eine Undichtigkeit derart gewährleistet, daß dieser Zustand akustisch durch ein Leckgeräusch wahrnehmbar ist, ohne daß es zu einem vollständigen, plötzlichen Druckabfall kommen kann. Die Kupplung kann dann bei Auftreten des Leckgeräusches weiter in die korrekt abgedichtete und arretierte "Vollraststellung" überführt werden. Bei der bekannten Kupplungsvorrichtung ist ein aus im Querschnitt kreisförmigem Federdraht gebogener Verriegelungsring nach Art eines Drahtsprengringes vorgesehen, der in einer ersten Ausführungsform in einer Aussparung des Gehäuseteils, dort "Mutterstück" genannt, angeordnet ist und für Vor- und Vollraststellung nacheinander mit zwei separaten, ringnutförmigen Ausnehmungen des Steckerteils, dort "Gegenstück" genannt, zusammenwirkt. In einer zweiten Ausführungsform ist der Verriegelungsring auf dem Stecker (Gegenstück) angeordnet und wirkt mit zwei ringnutförmigen Aussparungen im Gehäuseteil (Mutterstück) zusammen. Die jeweils zwei mit dem Verriegelungsring zusammenwirkenden Aussparungen führen zu einer herstellungsmäßig recht aufwendigen Kontur, zumal zum Überführen von der Vorrastung in die Vollrastung jeweils die eine, erste Aussparung eine "schräge Führungsoberfläche" aufweisen muß. Außerdem treten bei Drahtsprengringen Nachteile bezüglich der Steckkräfte sowie Zentrierungsprobleme auf.

Bei einer aus der US-A-4 703 958 bekannten Schnellkupplung ist zwar grundsätzlich auch eine "Doppelrastung" vorgesehen, allerdings sind dafür zwei einzelne Ringelemente vorhanden, die als starre, formstabile Ringkörper innerhalb der Gehäuseaufnahme gegen Federkraft radial (quer) verschiebbar angeordnet sind. Diese Ringelemente wirken in den beiden Raststellung mit der gleichen Flanke des Steckers zusammen, wobei der die Vorraststellung bewirkende Ring in der Vollraststellung wieder radial aus seiner Verriegelungsstellung herausbewegt wird. Insgesamt hat diese bekannte Kupplung dadurch eine recht große Baulänge. Was die "Doppelrastung" betrifft, so ergibt sich aus der Druckschrift auch nicht explizit die Wirkung, daß ein akustisch wahrnehmbares Leckgeräusch erzeugt werden soll. Vielmehr soll beim Lösevorgang (Entkuppeln) ein druckbedingtes "Herausfliegen" des Steckers dadurch vermieden werden, daß zunächst in einer "halbgelösten" Position ein Druckabbau erfolgt.

Der vorliegenden Erfindung liegt die Aufgabe zugrunde, eine Steckkupplung zu schaffen, die bei konstruktiv einfacher und herstellungsmäßig kostengünstiger Ausgestaltung verbesserte Steck- und Arretierungseigenschaften aufweist.

Erfindungsgemäß wird dies dadurch erreicht, daß die Verriegelungseinrichtung einerseits aus einem Doppelrastelement mit zwei axial benachbart in einer Innenringnut innerhalb der Gehäuse-Aufnahmeöffnung oder in einer Außenringnut am Steckerschaft gelagerten, elastisch verformbaren Halteelementen und andererseits aus einer Rastnut des Steckerschaftes oder der Gehäuse-Aufnahmeöffnung besteht, wobei in der Vorraststellung zunächst nur das in Einsteckrichtung erste Halteelement bereichsweise in die Rastnut einrastet und in der Vollraststellung beide Halteelemente bereichsweise in die Rastnut eingreifen.

Da somit erfindungsgemäß nur noch eine - entsprechend breit ausgebildete - Rastnut erforderlich ist, vereinfacht sich die jeweilige Kontur des Steckerschaftes bzw. der Aufnahmeöffnung, so daß auch eine preiswerte Herstellung möglich ist. Aber auch das erfindungsgemäße Doppelrastelement ist einfach und preiswert herstellbar, wozu es besonders vorteilhaft ist, wenn das Doppelrastelement als einstückiges Formteil aus Kunststoff ausgebildet ist, wobei jedes Halteelement bevorzugt die Form einer radialelastischen Halteringklammer aufweist. Dabei sind auch die Steckkräfte sehr gut beherrschbar. Zudem sind hierbei zweckmäßigerweise die beiden Halteelemente bzw. Halteringklammern über mindestens ein flexibles Verbinderelement derart relativbeweglich miteinander verbunden, daß sie sich zur Gewährleistung von Vor- und Vollraststellung unabhängig voneinander in radialer Richtung spreizen bzw.' verengen lassen.

Diesbezüglich kann in einer ersten Ausführungsform vorgesehen sein, daß das Verbinderelement nach Art eines Filmscharniers ausgebildet und dabei in einem etwa mittigen Umfangsbereich angeordnet ist, der etwa einem den Ringumfang unterbrechenden Schlitzbereich der Halteringklammern diametral gegenüberliegt. Hierbei kann vorteilhafterweise das Doppelrastelelement in einem über das Verbinderelement (z.B. Filmscharnier) in einer Ebene nebeneinanderliegenden Zustand der Halteringklammern geformt und dann die Halteringklammern um das Verbinderelement bzw. Filmscharnier in ihren benachbart aufeinanderliegenden Zustand zusammengeklappt werden. In einer Ausführungsvariante können die Halteringklammern jedoch auch über mehrere, umfänglich verteilt angeordnete, schlaufenartige Verbinderelemente verbunden sein. In diesem Fall wird das Doppelrastelement bevorzugt unmittelbar in der Montagestellung insbesondere im Spritzgußverfahren gefertigt.

Es ist zudem besonders vorteilhaft, wenn das Doppelrastelement durch Anlage über mindestens drei umfänglich verteilte Anlagepunkte bezüglich der Steckachse zentriert ist. Ferner weist vorzugsweise jede der beiden Halteringklammern einen rechteckigen, gegebenenfalls quadratischen, Ringquerschnitt auf. Durch diese vorteilhafte Ausgestaltung wird einerseits eine bezüglich der Halte- und Steckkräfte günstige Feder- bzw. Rastcharakteristik erreicht, und andererseits ist jeweils in der Vorraststellung die zweite, für die Vollraststellung vorgesehene Halteringklammer bereits gespreizt (bei Anordnung im Gehäuse) bzw. verengt (bei Anordnung am Steckerschaft), was zu kurzen Steckwegen und damit insgesamt zu einer vorteilhaft kurzen Baulänge der Steckkupplung führt.

In weiteren Unteransprüchen sowie auch in der nachfolgenden Beschreibung sind noch weitere vorteilhafte Ausgestaltungsmerkmale der Erfindung enthalten.

Anhand von in der Zeichnung dargestellten Ausführungsbeispielen und bestimmten Ausführungsvarianten soll im folgenden die Erfindung näher erläutert werden. Dabei zeigen:
- Fig. 1: einen Halb-Axialschnitt durch eine erfindungsgemäße Steckkupplung in einer ersten Ausführungsform und in der Vorraststellung,
- Fig. 2: eine Ansicht analog zu Fig. 1 der ersten Ausführungsform der Steckkupplung in der Vollraststellung,
- Fig. 3: eine halbgeschnittene Seitenansicht einer erfindungsgemäßen Steckkupplung in einer zweiten Ausführungsform in einem Zustand vor dem Einstecken,
- Fig. 4: eine Ansicht analog zu Fig. 3 in der Vorraststellung,
- Fig. 5: eine Ansicht analog zu Fig. 3 und 4 in der Vollraststellung,
- Fig. 6: eine Perspektivansicht einer ersten Ausführungsform eines Doppelrastelementes nach der Erfindung,
- Fig. 7: einen Halb-Axialschnitt einer zweiten Ausführungsform des erfindungsgemäßen Doppelrastelementes,
- Fig. 8: eine weitere Schnittansicht durch das Doppelrastelement zur Erläuterung einer vorteilhaften Weiterbildung und
- Fig. 9: eine weitere Ausführungsvariante der Steckkupplung mit axialgeschnittenem Gehäuseteil, wobei in der linken Hälfte die Vollraststellung und rechts die Vorraststellung dargestellt sind.

In den verschiedenen Figuren der Zeichnung sind gleiche Teile stets mit den gleichen Bezugszeichen versehen und werden daher in der Regel auch jeweils nur einmal beschrieben.

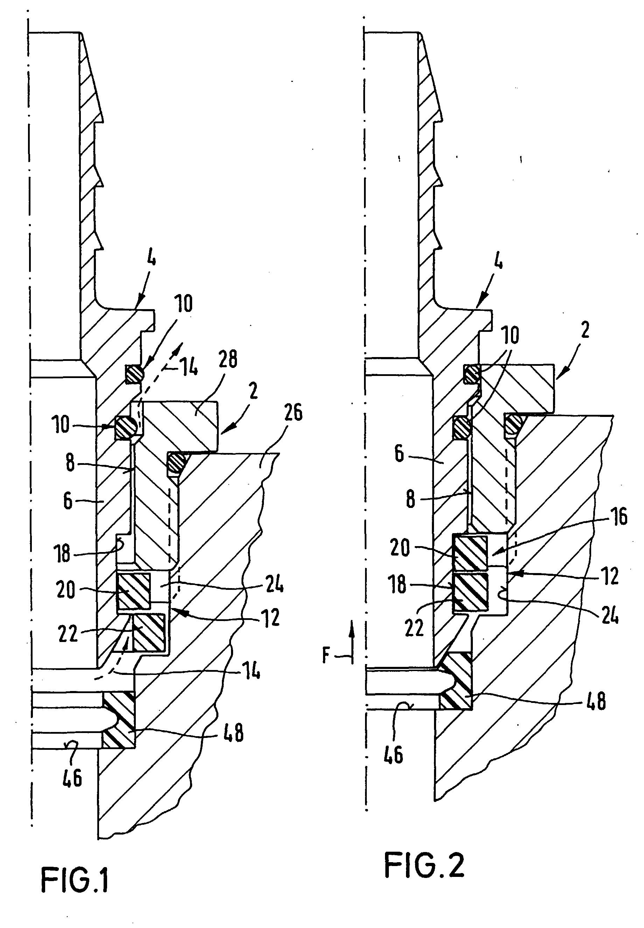

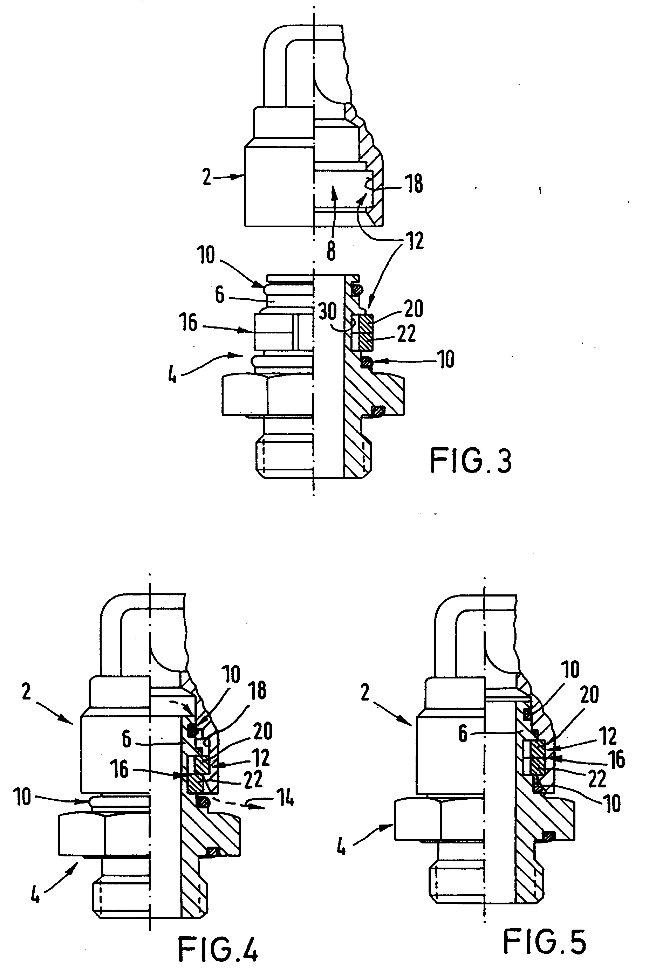

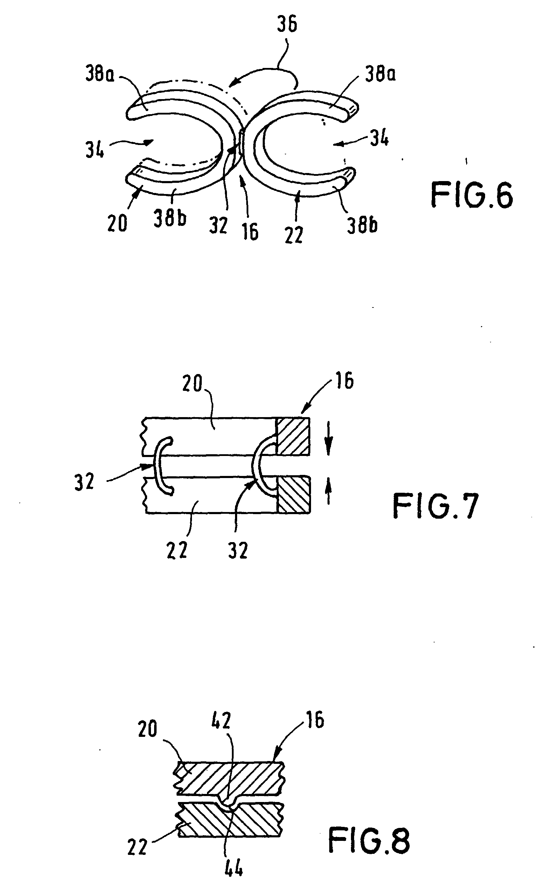

Wie sich zunächst aus den Fig. 1 und 2 ergibt, besteht eine erfindungsgemäße Steckkupplung aus einem Gehäuseteil 2 und einem Steckerteil 4. Das Steckerteil 4 ist mit einem Steckerschaft 6 in eine Aufnahmeöffnung 8 des Gehäuseteils 2 einsteckbar und hierbei über mindestens eine Umfangsdichtung 10 - in den dargestellten Ausführungsbeispielen sind jeweils zwei Umfangsdichtungen 10 vorgesehen - gegen die Aufnahmeöffnung 8 abgedichtet sowie über eine Verriegelungseinrichtung 12 gegen Lösen arretierbar. Die Verriegelungseinrichtung 12 ist derart ausgebildet, daß einerseits eine teilgesteckte Vorraststellung (Fig. 1; vgl. auch Fig. 4) und andererseits eine ganz gesteckte Vollraststellung (Fig. 2; vgl. auch Fig. 5) gewährleistet sind. In der bereits gegen Lösen arretierten Vorraststellung liegt eine derart unvollständige Abdichtung vor, daß im Falle einer Druckbeaufschlagung mit einem Druckmedium, insbesondere Druckluft, ein akustisch wahrnehmbares Leckgeräusch erzeugt wird. Es handelt sich hierbei um eine definiert begrenzte Undichtigkeit bzw. eine durch die Anordnung der Umfangsdichtung(en) 10 relativ zum Gehäuseteil 2 bewirkte Bildung eines "Drosselspaltes", wodurch das Druckmedium entsprechend der gestrichelten Pfeile 14 dosiert ausströmt und dabei das Leckgeräusch insbesondere als Pfeifen, Zischen oder dergleichen, erzeugt. Dies kann dann als Signal dafür gewertet werden, daß noch nicht die korrekt gesteckte Vollraststellung erreicht ist, so daß in diesem Fall ausgehend von der Vorraststellung die Steckkupplung durch weitergehende Stecken in die Vollraststellung überführt werden kann.

Erfindungsgemäß besteht nun die Verriegelungseinrichtung 12 einerseits aus einem Doppelrastelement 16 und nur einer mit diesem zusammenwirkenden Rastnut 18, wobei das Doppelrastelement 16 aus zwei axial benachbart angeordneten Halteelementen, insbesondere radialelastischen Halteringklammern 20,22 besteht. In der Vorraststellung (Fig, 1, 4) rastet zunächst nur die in Einsteckrichtung erste Halteringklammer 20 bereichsweise in die Rastnut 18 ein, und in der Vollraststellung (Fig. 2, 5 greifen beide Halteringklammern 20 und 22 bereichsweise in die Rastnut 18 ein. In diesem Zusammenhang bedeutet "bereichsweise", daß die jeweilige Halteringklammer 20,22 mit einem Teilbereich der radialen Erstreckung in die Rastnut 18 eingreift, wobei ein weiterer radialer Teilbereich dann in einer gegenüberliegenden Nut sitzt.

Im Falle der Ausführung nach Fig. 1 und 2 ist nun das Doppelrastelement 16 in einer Innenringnut 24 innerhalb der Gehäuse-Aufnahmeöffnung 8 gelagert. Dabei ist dann die Rastnut 18 am Steckerschaft 6 gebildet. Bei dieser Ausführung ist es besonders vorteilhaft, wenn das Gehäuseteil 2 aus zwei lösbar miteinander verbundenen Teilen besteht, und zwar aus einem Basisteil 26 und einem Einsatzteil 28, die axial zwischen sich die Innenringnut 24 zur Aufnahme des Doppelrastelementes 16 bilden bzw. begrenzen. Auf diese Weise ist eine einfache Montage des Doppelrastelementes sowie aber auch ein Lösen bzw. Trennen der Steckkupplung möglich, indem das Einsatzteil 28 vom Basisteil 26 getrennt und dann das Steckerteil 4 zusammen mit dem Doppelrastelement 16 entnommen werden kann. Die Verbindung der beiden Teile 26,28 kann beliebig, z.B. als Schraub-, Rast- und/ oder Bajonettverbindung, ausgebildet sein.

Bei der Ausführung nach Fig. 3 bis 5 ist das Doppelrastelement 16 in einer Außenringnut 30 am Steckerschaft 6 gelagert, während die Rastnut 18 im Bereich der Aufnahmeöffnung 8 des Gehäuseteils 2 gebildet ist. Im übrigen sind gleiche Teile wie in Fig. 1 und 2 mit den gleichen Bezugszeichen versehen und werden daher nicht nochmals beschrieben.

Die Halteringklammern 20,22 weisen hierbei einen den Ringumfang unterbrechenden Schlitzbereich 34 (vgl. Fig.6) auf, wodurch sie radialelastisch spreizbar bzw. verengbar sind.

Wie sich nun aus den Fig. 6 und 7 ergibt, ist das Doppelrastelement 16 bevorzugt als Formteil aus Kunststoff ausgebildet, und zwar insbesondere mit einstückig verbundenen Halteringklammern 20,22. Dabei sind die beiden Halteringklammern 20,22 über mindestens ein derart flexibles Verbinderelement 32 relativbeweglich miteinander verbunden, daß sie sich zur Gewährleistung der Vor- und Vollraststellung unabhängig voneinander in radialer Richtung spreizen bzw. verengen lassen. Im Falle der Ausführung nach Fig. 6 ist nur ein Verbinderelement 32 nach Art eines Filmscharniers vorgesehen. Das Verbinderelement 32 ist hierbei in einem etwa mittigen (bezogen auf den Ringumfang), dem Schlitzbereich 34 etwa diametral gegenüberliegenden Ringbereich angeordnet. Das Doppelrastelement 16 ist hierdurch sehr einfach herstellbar, indem es in einem über das Verbinderelement 32 symmetrisch in einer Ebene nebeneinanderliegenden Zustand der Halteringklammern 20,22 geformt und die Halteringklammern 20,22 dann um das als Scharnier fungierende Verbinderelement 32 in ihren axial benachbart auf. bzw. nebeneinanderliegenden Zustand zusammengeklappt werden. Dies ist in Fig. 6 anhand eines Pfeils 36 angedeutet. Die voneinander unabhängigen Rastbewegungen der Halteringklammern 20,22 sind hierbei dadurch gewährleistet, daß aufgrund des Verbinderelementes 32 jede Halteringklammer 20,22 praktisch in zwei Federarme 38a, 38b unterteilt ist.

Im Falle der Ausführung nach Fig. 7 sind die beiden Halteringklammern 20,22 über mehrere umfänglich verteilt angeordnete, schlaufenartige Verbinderelemente 32 miteinander verbunden. Hierbei wird das Doppelrastelement 16 zweckmäßigerweise unmittelbar in dem in Fig. 7 veranschaulichten Zustand, d.h. "in Position", hergestellt. Die Verbinderelemente 32 sind hierbei jeweils der das Doppelrastelement 16 lagernden Ringnut, d.h. entweder im Falle der Fig. 1 und 2 der Innenringnut 24 des Gehäuseteils 2 oder im Falle der Fig. 3 bis 5 der Außenringnut 30 des Steckerteils 4, in radialer Richtung zugekehrt, um zu vermeiden, daß durch die Verbinderelemente 32 die Rastfunktion, d.h. das Zusammenwirken mit der Rastnut 18, beeinträchtigt wird. Insofern gehört die in Fig. 7 konkret veranschaulichte Ausführungsform des Doppelrastelementes 16 zur Ausführungsform der Steckkupplung nach Fig. 3 bis 5. Für die Ausführung nach Fig. 1 und 2 wären die Verbinderelemente 32 nach Fig. 7 nicht innen, sondern außen anzuordnen (nicht dargestellt). In beiden Fällen bewirken die schlaufenartigen Verbinderelemente 32 vorteilhafterweise eine zusätzliche elastische Abstützung und damit eine zusätzliche Federwirkung beim Spreizen (Fig. 1,2) bzw. Verengen (Fig. 3 bi's 5) der Halteringklammern 20, 22.

In einer vorteilhaften Ausführungsform ist das Doppelrastelement 16 - vorzugsweise im Bereich beider Halteringklammern 20,22 - durch mindestens Dreipunktanlage (mindestens drei über den Umfang verteilte Anlagepunkte) zur Gehäuseteil-Aufnahmeöffnung 8 bzw. zum Steckerschaft 6 bezüglich der Steckachse zentriert gehalten. Diese Anlagepunkte können beispielsweise im Falle der Ausführung nach Fig. 6 im Bereich des filmscharnierartigen Verbinderelementes 32 einerseits und im Bereich der freien Enden jedes der beiden Federarme 38a, b angeordnet sein. In den jeweils dazwischen liegenden Bereichen ist dann die Radialelastizität gewährleistet.

Es ist ferner zweckmäßig, wenn das Doppelrastelement 16 im Bereich jeder der beiden Halteringklammern 20,22 einen rechteckigen Ringquerschnitt (Schnittebene in axialer bzw. radialer Richtung) aufweist. Wie sich aus Fig. 1 und 4 jeweils ergibt, wird hierdurch unter anderem erreicht, daß in der Vorraststellung jeweils die zweite Halteringklammer 22 bereits gespreizt (Fig. 1) bzw. verengt (Fig. 4) ist, so daß nur noch ein kurzer Steckweg erforderlich ist, um dann in der Vollraststellung auch die zweite Halteringklammer 22 in die Rastnut 18 einrasten zu lassen.

In Fig. 8 ist noch angedeutet, daß jeweils eine der beiden Halteringklammern 20,22 auf ihrer der anderen Halteringklammer axial zugekehrten Seite mindestens einen axialen Positionierungsvorsprung 42 aufweisen kann, der in eine entsprechende Positionierungsvertiefung 44 der anderen, gegenüberliegenden Halteringklammer eingreift. Hierdurch können die Halteringklammern 20,22 gegebenenfalls auch ohne einstückige Verbindung auf einfache Weise hergestellt und auch montiert werden, indem sie beispielsweise auf einem Montagedorn oder dergleichen Werkzeug vormontiert und dann eingesetzt werden.

In den Fig. 1 und 2 ist noch als vorteilhafte Weiterbildung zu erkennen, daß innerhalb der Aufnahmeöffnung 8 ein auf einer Stufenfläche 46 abgestütztes, bevorzugt als gummielastisches Pufferelement ausgebildetes Federelement 48 derart angeordnet sein kann, daß in der Vollraststellung das Steckerteil 4 durch Anlage an dem Federelement 48 mit einer gegen die Einsteckrichtung wirkenden Kraft F beaufschlagt wird, so daß das Doppelrastelement 16 - trotz eines grundsätzlich vorhandenen, geringen Axialspiels - in Anlage an der "oberen" Begrenzungsfläche der Innenringnut 24 gehalten wird.

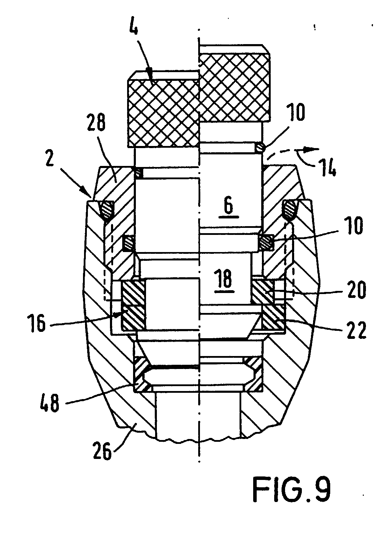

Bei der Ausführung nach Fig. 1 und 2 sind beide Umfangsdichtungen 10 als O-Ringe in Ringnuten des Steckerteils 4 angeordnet. In Fig. 9 ist alternativ hierzu vorgesehen, zumindest die eine, in Einsteckrichtung weiter "innen" liegende Umfangsdichtung 10 in einer Innenringnut des Gehäuseteils 2, insbesondere des Einsatzteils 28, anzuordnen. Dies ist insofern von Vorteil, als die Dichtung in der Vorraststellung gegen "Herausreißen" durch die auftretende Druckmittelströmung (Pfeil 14) weitgehend geschützt ist.

## Patentansprüche

1. Steckkupplung für Druckmittelsysteme, bestehend aus einem Gehäuseteil (2) und einem Steckerteil (4), wobei das Steckerteil (4) mit einem Steckerschaft (6) über mindestens eine Umfangsdichtung (10) abgedichtet in eine Aufnahmeöffnung (8) des Gehäuseteils (2) einsteckbar und über eine Verriegelungseinrichtung (12) gegen Lösen arretierbar ist, wobei die Verriegelungseinrichtung (12) derart ausgebildet ist, daß eine teilgesteckte Vorraststellung und eine ganz gesteckte Vollraststellung gewährleistet sind, wobei in der Vorraststellung eine derart unvollständige Abdichtung vorliegt, daß im Falle einer Druckbeaufschlagung mit einem Druckmedium ein Signal, insbesondere ein akustisch wahrnehmbares Leckgeräusch, erzeugt wird, und wobei in der Vollraststellung eine vollständige, druckdichte Abdichtung vorliegt, wobei die Verriegelungseinrichtung (12) einerseits aus einem Doppelrastelement (16) mit zwei axial benachbart in einer Innenringnut (24) innerhalb der Gehäuse-Aufnahmeöffnung (8) oder in einer Außenringnut (30) am Steckerschaft (6) gelagerten, elastisch verformbaren Halteelementen (20,22) und andererseits aus einer Rastnut (18) des Steckerschaftes (6) oder der Gehäuse-Aufnahmeöffnung (8) besteht, wobei in der Vorraststellung zunächst nur das in Einsteckrichtung erste Halteelement (20) bereichsweise in die Rastnut (18) einrastet und in der Vollraststellung beide Halteelemente (20,22) bereichsweise in die Rastnut (18) eingreifen.

2. Steckkupplung nach Anspruch 1,
**dadurch gekennzeichnet** , daß das Doppelrastelement (16) als einstückiges Formteil aus Kunststoff ausgebildet ist, wobei jedes Halteelement als radialelastische Halteringklammer (20,22) ausgebildet ist.

3. Steckkupplung nach Anspruch 1 oder 2,
**dadurch gekennzeichnet** , daß die beiden Halteelemente bzw. Halteringklammern (20,22) über mindestens ein flexibles Verbinderelement (32) relativbeweglich miteinander verbunden sind.

4. Steckkupplung nach Anspruch 3,
**dadurch gekennzeichnet** , daß das Verbinderelement (32) nach Art eines Filmscharniers ausgebildet und in einem - einem den Umfang unterbrechenden Schlitzbereich (34) der Halteelemente bzw. Halteringklammern (20,22) etwa diametral gegenüberliegenden - Bereich angeordnet ist, wobei das Doppelrastelement (16) in einem über das Verbinderelement (2) in einer Ebene nebeneinanderliegenden Zustand der Halteelemente bzw. Halteringklammern (20,22) geformt und die Halteelemente bzw. Halteringklammern (20,22) dann um das Verbinderelement (32) in ihren benachbart aufeinanderliegenden Zustand zusammengeklappt sind.

5. Steckkupplung nach Anspruch 3,
**dadurch gekennzeichnet** , daß die Halteelemente bzw. Halteringklammern (20,22) über vorzugsweise mehrere umfänglich verteilt angeordnete, schlaufenartige Verbinderelemente (32) miteinander verbunden sind.

6. Steckkupplung nach Anspruch 5,
**dadurch gekennzeichnet** , daß im Falle der Anordnung des Doppelrastelementes (16) in der Aufnahmeöffnung (8) des Gehäuseteils (2) die Verbinderelemente (32) im radial äußeren Bereich angeordnet und mit den Halteelementen bzw. Halteringklammern (20,22) verbunden sind.

7. Steckkupplung nach Anspruch 5,
**dadurch gekennzeichnet** , daß im Falle der Anordnung des Doppelrastelementes (16) am Steckerschaft (6) die Verbinderelemente (32) im radial inneren Bereich angeordnet und mit den Halteelementen bzw. Halteringklammern (20,22) verbunden sind.

8. Steckkupplung nach einem oder mehreren der Ansprüche 1 bis 7,
**dadurch gekennzeichnet** , daß das Doppelrastelement (16) vorzugsweise im Bereich beider Halteelemente bzw. Halteringklammern (20,22) durch mindestens Dreipunktanlage bezüglich der Steckachse zentriert ist.

9. Steckkupplung nach einem oder mehreren der Ansprüche 1 bis 8,
**dadurch gekennzeichnet** , daß das Doppelrastelement (16) im Bereich vorzugsweise jeder der beiden Halteelemente bzw. Halteringklammern (20, 22) einen rechteckigen Ringquerschnitt aufweist.

10. Steckkupplung nach einem oder mehreren der Ansprüche 2 bis 9,
**dadurch gekennzeichnet** , daß eine der beiden Halteelemente bzw. Halteringklammern (20, 22) auf ihrer der anderen Halteringklammer axial zugekehrten Seite mindestens einen axialen Positionierungsvorsprung (42) aufweist, der in eine entsprechende Positionierungsvertiefung (44) der anderen Halteringklammer eingreift.

## Claims

1. Plug-in coupling for pressure medium systems consistinq of a housing part (2) and a plug part (4), wherein the plug part (4) can be inserted by a plug shank (6) into a socket (8) in the housing part (2) while being sealed by at least one circumferential seal (10) and can be secured against release by a locking device (12), the locking device (12) being designed such that a partially inserted pre-catch position and a completely inserted full-catch position are guaranteed, wherein the seal existing in the pre-catch position is so incomplete that a signal, in particular an acoustically detectable leaking noise, is produced in the event of pressure loading with a pressure medium and wherein a complete pressure-tight seal exists in the full-catch position, the locking device (12) consisting, on the one hand, of a double catch element (16) with two elastically deformable holding elements (20, 22) mounted axially adjacently in an internal annular groove (24) inside the housing socket (8) or in an external annular groove (30) on the plug shank (6) and, on the other hand, of a catch groove (18) in the plug shank (6) or the housing socket (8), wherein in the pre-catch position initially only the first holding element (20) in the insertion direction partially catches in the catch groove (18) and in the full-catch position both holding elements (20, 22) partially engage in the catch groove (18).

2. Plug-in coupling according to claim 1, characterised in that the double catch element (16) is designed as an integral moulding of plastics material, each holding element being designed as a radially elastic annular holding clip (20, 22).

3. Plug-in coupling according to claim 1 or 2, characterised in that the two holding elements or annular holding clips (20, 22) are connected to one another relatively movably by at least one flexible connector element (32).

4. Plug-in coupling according to claim 3, characterised in that the connector element (32) is designed in the manner of a film hinge and is arranged in a region - substantially diametrically opposed to a slot region (34) of the holding elements or annular holding clips (20, 22) interrupting the circumference -, wherein the double catch element (16) is formed, via the connector element (2 [sic]), with the holding elements or annular holding clips (20, 22) next to one another in a plane and the holding elements or annular holding clips (20, 22) are then folded together about the connector element (32) into their adjacently superposed state.

5. Plug-in coupling according to claim 3, characterised in that the holding elements or annular holding clips (20, 22) are connected to one another preferably by a plurality of circumferentially distributed loop-like connector elements (32).

6. Plug-in coupling according to claim 5, characterised in that, if the double catch element (16) is arranged in the socket (8) in the housing part (2), the connector elements (32) are arranged in the radially outer region and are connected to the holding elements or annular holding clips (20, 22).

7. Plug-in coupling according to claim 5, characterised in that, if the double catch element (16) is arranged on the plug shank (6), the connector elements (32) are arranged in the radially inner region and are connected to the holding elements or annular holding clips (20, 22).

8. Plug-in coupling according to one or more of claims 1 to 7, characterised in that the double catch element (16) is centred with respect to the plug-in axis, preferably in the region of the two holding elements or annular holding clips (20, 22), by at least three-point contact.

9. Plug-in coupling according to one or more of claims 1 to 8, characterised in that the double catch element (16) has a rectangular annulus cross section preferably in the region of each of the two holding elements or annular holding clips (20, 22).

10. Plug-in coupling according to one or more of claims 2 to 9, characterised in that one of the two holding elements or annular holding clips (20, 22) has, on its side axially facing the other annular holding clip, at least one axial locating projection (42) which engages in a corresponding locating recess (44) in the other annular holding clip.

## Revendications

1. Raccord à fiche pour système à agent sous pression, composant une partie boîtier (2) et une partie fiche (4), dans lequel la partie fiche (4) peut être emmanchée par une tige (6) de partie fiche dans une ouverture réceptrice (8) de la partie boîtier (2), et enfermée à joint étanche à la pression par au moins une garniture d'étanchéité périphérique (10), et peut être retenue à l'encontre de la séparation par un dispositif de verrouillage (12), le dispositif de verrouillage (12) étant agencé de manière à garantir une position de pré-enclenchement partiellement emmanchée et une position d'enclenchement complet entièrement emmanchée, une étanchéité suffisamment incomplète étant présente dans la position de pré-enclenchement pour que, dans le cas d'une sollicitation de pression avec un fluide de pression, soit produit un signal, en particulier un bruit de fuite perceptible acoustiquement, tandis que, dans la position d'enclenchement complet, on obtient une étanchéité entièrement étanche à la pression, le dispositif de verrouillage (12) étant composé, d'une part, d'un élément de verrouillage double (16) possédant deux éléments de retenue (20, 22) montés adjacents dans la direction axiale dans une gorge annulaire intérieure (24) à l'intérieur de l'ouverture réceptrice (8) du boîtier ou dans une gorge annulaire extérieure (30) prévue sur la tige (6) de la partie fiche, et qui sont élastiquement déformables et, d'autre part, d'une rainure de verrouillage (18) de la tige (6) de la partie fiche, ou de l'ouverture réceptrice (8) du boîtier, dans la position de pré-enclenchement, l'élément de retenue (20) qui est le premier par référence à la direction de l'emmanchement, s'enclenchant tout d'abord, seulement par régions dans la rainure de verrouillage (18) tandis que, dans la position d'enclenchement complet, les deux éléments de retenue (20, 22) sont engagés par régions dans la rainure de verrouillage (18).

2. Raccord à fiche selon la revendication 1, caractérisé en ce que l'élément de verrouillage double (16) est constitué par un élément moulé en matière plastique en une seule pièce, chaque élément de retenue étant constitué par une agrafe de retenue annulaire (20, 22) élastique dans la direction radiale.

3. Raccord à fiche selon la revendication 1 ou 2, caractérisé en ce que les deux éléments de retenue ou agrafes de retenue annulaires (20, 22) sont assemblés entre eux avec liberté de mouvement relatif par l'intermédiaire d'au moins un élément de liaison flexible (32).

4. Raccord à fiche selon la revendication 3, caractérisé en ce que l'élément de liaison (32) est agencé à la façon d'une charnière de film et est disposé dans une région - sensiblement diamétralement opposée à une région de fente (34) des éléments de retenue ou des agrafes de retenue annulaires (20, 22), qui interrompt la périphérie - l'élément de verrouillage double (16) étant moulé dans un état où les éléments de retenue ou agrafes de retenue annulaires (20, 22) sont maintenus juxtaposés dans un même plan au moyen de l'élément de liaison (2) et les éléments de retenue ou agrafes de retenue annulaires (20, 22) sont ensuite rabattus autour de l'élément de liaison (32) pour prendre leur état superposé et adjacent.

5. Raccord à fiche selon la revendication 3, caractérisé en ce que les éléments de retenue ou agrafes de retenue annulaires (20, 22) sont assemblés entre eux au moyen d'éléments de liaison (32) en forme de boucle, qui sont de préférence en nombre supérieur à un et répartis sur la périphérie.

6. Raccord à fiche selon la revendication 5, caractérisé en ce que, dans le cas où l'élément de verrouillage double (16) est disposé dans l'ouverture réceptrice (8) de la partie boîtier (2), les éléments de liaison (32) sont disposés et assemblés aux éléments de retenue ou aux agrafes de retenue annulaire (20, 22) dans la région radialement extérieure.

7. Raccord à fiche selon la revendication 5, caractérisé en ce que dans le cas où l'élément de verrouillage double (16) est disposé sur la tige (6) de la partie fiche, les éléments de liaison (32) sont disposés et assemblés aux éléments de retenue ou aux agrafes de retenue annulaire (20, 22) dans la région radialement intérieure.

8. Raccord à fiche selon une ou plusieurs des revendications 1 à 7, caractérisé en ce que l'élément de verrouillage double (16) est de préférence centré par rapport à l'axe d'emmanchement, dans la région des deux éléments de retenue ou agrafes de retenue annulaires (20, 22), par un appui au moins en trois points.

9. Raccord à fiche selon une ou plusieurs des revendications 1 à 8, caractérisé en ce que l'élément de verrouillage double (16) présente une section de bague rectangulaire, de préférence dans la région de chacun des deux éléments de retenue ou agrafes de retenue annulaires (20, 22).

10. Raccord à fiche selon une ou plusieurs des revendications 2 à 9, caractérisé en ce qu'un des deux éléments de retenue ou agrafes de retenue annulaires (20, 22) présente sur son côté dirigé axialement vers l'autre agrafe de retenue annulaire, au moins une saillie axiale de positionnement (42) qui s'engage dans un évidement de positionnement correspondant (44) de l'autre agrafe de retenue annulaire.
